# FASCICULE DE BREVET EUROPEEN

(11) **EP 0 438 341 B1**
(45) Date de publication et mention de la délivrance du brevet: **11.08.1993**
(21) Numéro de dépôt: 91400068.2
(22) Date de dépôt: 15.01.1991
(51) Int. Cl.: B60S 1/04

(54) **Essuie-glace caréné, notamment pour véhicule automobile**
Verkleideter Scheibenwischer, insbesondere für Kraftfahrzeug
Streamlined windshield wiper, in particular for automobile vehicle

(30) Priorité: 17.01.1990 FR 9000481
(43) Date de publication de la demande: 24.07.1991
(73) Titulaire: VALEO SYSTEMES D'ESSUYAGE, 78180 Montigny-Le-Bretonneux (FR)
(72) Inventeur: Schon, Wilfrid, F-63580 Saint-Etienne/Usson (FR)
(74) Mandataire: Gamonal, Didier

(56) Documents cités:
- US-A- 3 263 261
- US-A- 4 663 797

## Description

La présente invention se rapporte à un essuie-glace caréné, notamment pour véhicules automobiles.

Un tel essuie-glace se compose habituellement d'un balai d'essuie-glace comportant une monture porteuse d'une lame d'essuie-glace apte à essuyer une surface vitrée, telle qu'un pare-brise ou une vitre arrière d'un véhicule automobile, ledit balai étant porté par un bras d'essuie-glace apte à être entraîné dans un mouvement alternatif de rotation par un axe d'entraînement fixe sur la carrosserie du véhicule.

Pour des raisons d'esthétique et d'aérodynamisme, il est prévu d'envelopper au moins le bras d'essuie-glace par un dispositif de capotage ou carénage.

Plus particulièrement, ce carénage, de forme générale en "U" inversé, est fixé au bras d'essuie-glace de façon à ce que les ailes du "U" soient dirigées vers la surface à essuyer en masquant ainsi le bras d'essuie-glace.

Grâce à ce carénage, il est possible de donner à l'essuie-glace une forme d'ensemble esthétique tout en lui procurant une fonction aérodynamique telle que tout flux d'air pouvant pénétrer dans l'espace libre entre la surface à essuyer et l'essuie-glace soit dévié en dehors de cet espace sans gêner la bonne fonctionnabilité dudit essuie-glace.

Cependant, il a été constaté certains inconvénients, notamment lorsque le bras présente une direction générale non droite, en particulier celle par laquelle le bras d'essuie-glace se présente sous la forme de deux parties sensiblement rectilignes formant entre elles un angle non nul en constituant, à l'intersection des deux parties, un coude.

Dans cette configuration, le carénage porté par le bras présente la même direction générale que celle du bras avec également un coude.

Ainsi, lors d'une intervention mécanique sur l'essuie-glace, comme le changement du balai d'essuie-glace ou lors du nettoyage manuel de la vitre, il est nécessaire de placer l'essuie-glace dans une position dite de débrayage.

Pour atteindre cette position, l'extrémité du bras d'essuie-glace, portée par un axe de pivotement prévu sur la tête d'entraînement lié à l'axe d'entraînement, pivote, de manière connue en soi, par rapport à cet axe de façon à éloigner son autre extrémité, celle portant le balai d'essuie-glace, hors de la surface à essuyer dans un mouvement sensiblement perpendiculaire à ladite surface, la position débrayée étant telle qu'à la fin du mouvement, l'essuie-glace reste de lui-même dans une position éloignée de ladite surface.

Après intervention ou nettoyage, l'opérateur pousse généralement l'essuie-glace dans un mouvement inverse au précédent sans l'accompagner manuellement afin de placer l'essuie-glace dans une position, dite de fonctionnement, dans laquelle le balai, et plus particulièrement la lame d'essuie-glace, est en contact avec la surface à essuyer.

Lors du contact du balai d'essuie-glace sur la vitre à essuyer et de par l'énergie cinétique procurée par le mouvement de pivotement de l'ensemble bras-balai-carénage autour de l'axe de pivotement, les zones de jonction entre les deux parties droites du bras et du carénage ou coudes continuent leurs mouvements en direction de la surface à essuyer jusqu'à venir heurter ladite surface, l'extrémité du bras portant le balai devenant fixe par appui du balai sur la surface vitrée.

De même, lorsque l'essuie-glace est porté par le hayon arrière d'un véhicule automobile, ce heurt se produit également lors de la fermeture de ce hayon dans un mouvement brusque autour de ses articulations, dit plus communément claquement.

Ce heurt procure un bruit désagréable et peut entraîner la détérioration, soit du carénage, soit de la surface vitrée pouvant gêner la bonne visibilité du conducteur.

La présente invention se propose de remédier aux inconvénients mentionnés ci-dessus en proposant un essuie-glace de conception très simple et très économique.

Selon l'invention, l'essuie-glace caréné, notamment pour véhicule automobile, constitué d'un balai d'essuie-glace apte à essuyer une surface vitrée et porté par un bras d'essuie-glace et d'un carénage porté au moins par ledit bras (Essuie-glace caréné du type divulgué, par exemple, par US-A-3,263,261), est caractérisé en ce que des moyens amortisseurs de chocs sont prévus entre l'essuie-glace caréné et la surface à essuyer, de telle sorte que en cas de heurt entre l'essuie-glace caréné et la surface vitrée, une protection de la vitre à essuyer et du carénage est assurée.

Selon un mode de réalisation de l'invention, les moyens amortisseurs de chocs sont portés par le bras d'essuie-glace.

Selon un mode de réalisation de l'invention, les moyens amortisseurs de chocs sont portés par le carénage.

Les autres caractéristiques et avantages de l'invention ressortiront de la description qui va suivre, donnée à titre d'exemple, et en se référant aux dessins annexé sur lesquels:
- la figure 1 est une vue générale schématique de l'essuie-glace caréné selon l'invention, vu à travers la surface à essuyer, et en considérant l'observateur à l'intérieur du véhicule;
- la figure 2 est une vue schématique latérale selon la figure 1;
- la figure 3 est une vue en perspective partielle de l'essuie-glace selon l'invention;
- la figure 4 est une vue en perspective à plus grande échelle du détail A de la figure 3.

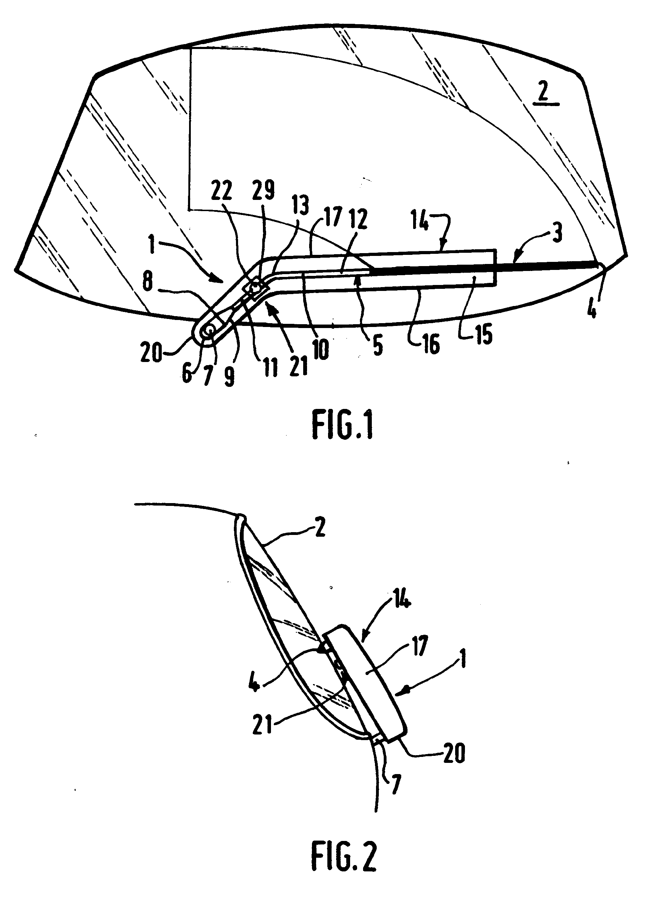

On se réfère maintenant aux figures 1 et 2 qui montrent un essuie-glace caréné 1 apte à essuyer une surface vitrée 2.

L'essuie-glace caréné 1 se compose d'un balai d'essuie-glace 3 se présentant sous la forme d'une monture (non représentée) porteuse d'une lame d'essuie-glace 4 apte à essuyer la surface 2, ledit balai étant porté par un bras d'essuie-glace 5 apte à être entraîné dans un mouvement alternatif de rotation par une tête d'entraînement 6 liée à un axe d'entraînement 7, ledit axe étant porté par des parties fixes du véhicule automobile.

De manière connue en soi, la tête d'entraînement 6 porte un axe de pivotement 8, orthogonal à l'axe d'entraînement 7 et sensiblement parallèle à la surface à essuyer 2, cet axe de pivotement étant relié à un carter 9 portant la tige 10 du bras 5, de manière à autoriser un débattement angulaire du bras; la tête d'entraînement 6, le carter 9 et la tige 10 constituant l'essentiel du bras d'essuie-glace.

Egalement de manière connue en soi, l'extrémité de la tige 10, opposée à celle liée au carter 9, est conformée de manière à pouvoir porter à articulation le balai d'essuie-glace 3.

Comme mieux visible sur la figure 1, le bras d'essuie-glace présente une direction générale non droite. Plus précisément, la tige 10 présente une première portion 11 et une deuxième portion 12, toutes deux sensiblement rectilignes, venant se rejoindre dans une zone de jonction 13 ou coude, de façon à ce que les deux parties rectilignes forment entre elles un angle non nul et inférieur à 180°.

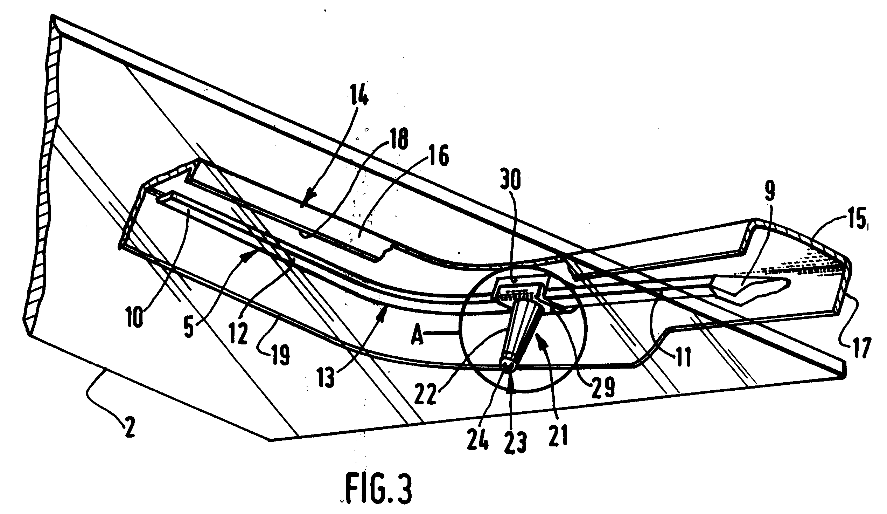

En se référant en plus à la figure 3, le bras 5 est apte à porter un dispositif de capotage 14 ou carénage.

Ce carénage a une forme générale en section, d'un "U" inversé dont la paroi intérieure du fond 15 s'appuie sur le bras d'essuyage et dont les ailes 16,17 sont dirigées vers la surface à essuyer 2, d'une manière telle que les extrémités 18,19 desdites ailes soient disposées à distance de ladite surface à essuyer.

Comme mieux visible sur les figures, la forme générale longitudinale du carénage 14 est semblable à la forme générale longitudinale du bras 5 en présentant également un coude, et plus précisément le profil en "U" est ouvert à son extrémité se situant au niveau du balai d'essuie-glace 3, alors que l'extrémité du carénage se situant au niveau de l'axe d'entraînement est formé par une paroi 20 de direction sensiblement circulaire.

En pratique, les ailes 16-17 du carénage n'ont pas la même hauteur.

Comme mieux visible sur les figures, des moyens amortisseurs de chocs 21 sont prévus entre l'essuie-glace 1 et la surface à essuyer 2.

Ces moyens amortisseurs de chocs sont portés, soit par le bras d'essuie-glace 5, soit par le carénage 14, en étant situés au voisinage du coude 13.

En pratique, et comme mieux visible sur la figure 3, les moyens amortisseurs de chocs consistent en au moins une saillie 22 dirigée vers la surface à essuyer 2, et dont l'extrémité 23 est située à distance de ladite surface, tout en étant de longueur suffisante pour dépasser la hauteur de la plus grande aile du carénage 14.

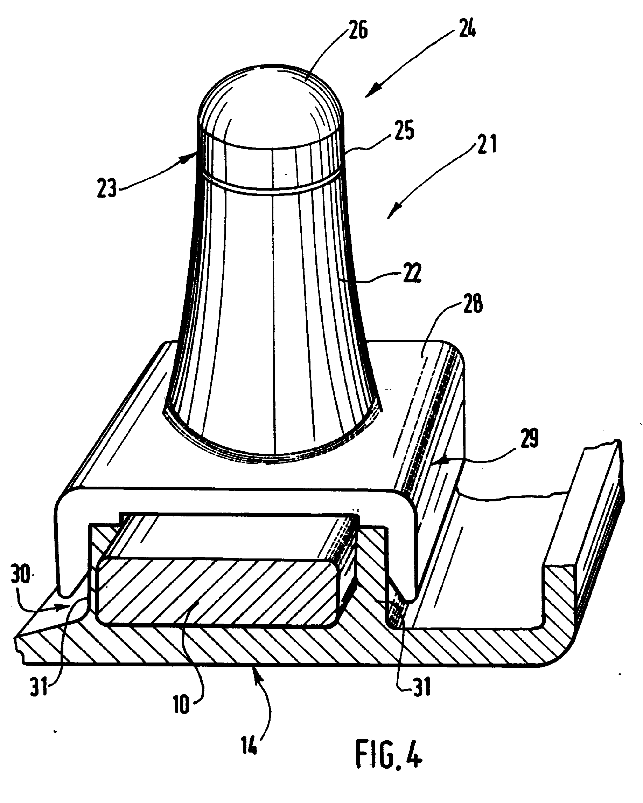

De préférence, et comme visible sur la figure 4, l'extrémité libre de la saillie 22 est constituée une partie élastiquement déformable 24 formant butoir élastique.

Cette partie élastiquement déformable peut être rapportée sur la saillie par tous moyens connus en soi tels que soudage, collage ou clipage.

Cette partie élastiquement déformable 24 présente une première partie cylindrique 25 se poursuivant par une partie demi-hémisphérique 26, de manière à assurer un contact ponctuel entre la surface à essuyer et ce butoir en cas de heurt éventuel.

En pratique, la saillie 22 présente, à titre d'exemple, une forme tronconique dont la petite base porte le butoir 24 et dont la grande base est confondue avec la surface extérieure 28 d'une embase 29 portant ainsi la saillie et le butoir, ladite embase étant adaptée à être portée par l'essuie-glace caréné 1.

Plus précisément, l'embase 29 est portée par un socle 30 issu du fond 15 du carénage 14.

En se référant à la figure 4, il peut être remarqué que le socle 30 est constitué de deux ailes 31 à distance l'une de l'autre, distance suffisante pour le passage de la tige 10 du bras d'essuie-glace entre ces deux ailes, et l'embase 29 vient coiffer ces deux ailes et la tige du bras de manière à assurer une liaison entre la tige, le carénage et la saillie.

La liaison entre le socle 30 et l'embase 29 peut être effectuée par tous moyens connus, de préférence il est envisagé que ce socle soit soudé par ultrasons, par exemple, avec ladite embase.

Bien entendu, et cela sans sortir du cadre de l'invention, la liaison entre le socle et l'embase peut être effectuée par clipage.

La présente invention n'est pas limitée aux exemples de réalisations décrites, et notamment il peut être envisagé que la saillie 22 et la partie élastiquement déformable 24 ne forment qu'une seule et unique pièce dans le même matériau élastique déformable.

De même, il peut être envisagé que cette saillie soit issue directement, soit du fond 15 du carénage, soit à partir de l'une des extrémités 18,19 des ailes 16,17 dudit carénage.

## Revendications

1. Essuie-glace caréné, notamment pour véhicule automobile, constitué d'un balai d'essuie-glace (3) apte à essuyer une surface vitrée (2) et porté par un bras d'essuie-glace (5) et d'un carénage (14) porté au moins par ledit bras, caractérisé en ce que des moyens amortisseurs de chocs (21) sont prévus entre l'essuie-glace caréné (1) et la surface à essuyer (2) de telle sorte que, en cas de heurt entre, l'essuie-glace caréné et la surface vitrée, une protection de la vitre à essuyer et du carénage est assurée.

2. Essuie-glace caréné selon la revendication 1, caractérisé en ce que les moyens amortisseurs de chocs (21) sont portés par le bras d'essuie-glace (5).

3. Essuie-glace caréné selon la revendication 1, caractérisé en ce que les moyens amortisseurs de chocs (21) sont portés par le carénage (14).

4. Essuie-glace caréné selon l'une des revendications 1 à 3, caractérisé en ce que les moyens amortisseurs de chocs sont formés par une saillie (22) dirigée vers la surface à essuyer (2) et à distance de ladite surface.

5. Essuie-glace caréné selon la revendication 4, caractérisé en ce que l'extrémité libre de la saillie (22) est constitué par une partie élastiquement déformable (24) dirigée vers la surface à essuyer (2).

6. Essuie-glace caréné selon l'une des revendications 4 à 5, caractérisé en ce que la saillie (22) est portée par une embase (29).

7. Essuie-glace caréné selon la revendication 6, caractérisé en ce que l'embase (29) coopère avec un socle (30) issu du carénage (14).

8. Essuie-glace caréné selon la revendication 6 ou 7, caractérisé en ce que l'embase (29) est liée au socle (30).

9. Essuie-glace caréné selon l'une des revendications 6 à 8, caractérisé en ce que l'embase (29) et le socle (30) sont disposés de part et d'autre du bras d'essuie-glace (5) de manière à assurer l'immobilisation du carénage (14) par rapport au bras (5).

## Patentansprüche

1. Verkleideter Scheibenwischer, insbesondere für Kraftfahrzeug, bestehend aus einer Scheibenwischerleiste (3), geeignet zur Reinigung einer Glasfläche (2) und auf einem Wischarm (5) und einer Verkleidung (14) aufliegend, die wenigstens auf dem genannten Arm aufliegt, **dadurch gekennzeichnet,** daß Stoßdämpfermittel (21) zwischen dem verkleideten Scheibenwischer (1) und der zu reinigenden Fläche (2) in der Weise vorgesehen sind, daß im Falle eines Aufpralls zwischen dem verkleideten Scheibenwischer und der Glasfläche ein Schutz der zu reinigenden Scheibe und der Verkleidung gewährleistet ist.

2. Verkleideter Scheibenwischer nach Anspruch 1, **dadurch gekennzeichnet,** daß die Stoßdämpfermittel (21) auf dem Scheibenwischerarm (5) aufliegen.

3. Verkleideter Scheibenwischer nach Anspruch 1, **dadurch gekennzeichnet,** daß die Stoßdämpfermittel (21) auf der Verkleidung (14) aufliegen.

4. Verkleideter Scheibenwischer nach einem der Ansprüche 1 bis 3, **dadurch gekennzeichnet,** daß die Stoßdämpfermittel aus einem Vorsprung (22) bestehen, der der zu reinigenden Fläche (2) zugewandt ist und einen Abstand zu dieser aufweist.

5. Verkleideter Scheibenwischer nach Anspruch 4, **dadurch gekennzeichnet,** daß das freie Ende des Vorsprungs (22) aus einem elastisch verformbaren Teil (24) besteht, der der zu reinigenden Fläche (2) zugewandt ist.

6. Verkleideter Scheibenwischer nach einem der Ansprüche 4 bis 5, **dadurch gekennzeichnet,** daß der Vorsprung (22) auf einer Sitzfläche (29) aufliegt.

7. Verkleideter Scheibenwischer nach Anspruch 6, **dadurch gekennzeichnet,** daß die Sitzfläche (29) mit einem von der Verkleidung (14) ausgehenden Sockel (30) zusammenwirkt.

8. Verkleideter Scheibenwischer nach Anspruch 6 oder 7, **dadurch gekennzeichnet,** daß die Sitzfläche (29) mit dem Sockel (30) verbunden ist.

9. Verkleideter Scheibenwischer nach einem der Ansprüche 6 bis 8, **dadurch gekennzeichnet,** daß die Sitzfläche (29) und der Sockel (30) beiderseits des Scheibenwischerarms (5) so angeordnet sind, daß die Verriegelung der Verkleidung (14) im Verhältnis zum Arm (5) sichergestellt ist.

## Claims

1. A streamlined screen wiper, in particular for a motor vehicle, comprising a screen wiper blade (3) for sweeping a glazed surface (2) and carried by a screen wiper arm (5), and a streamlining element (14) carried by at least the said arm, characterised in that shock absorbing means (21) are provided between the streamlined screen wiper (1) and the surface (2) being swept, in such a way that, in the event of impact between the streamlined screen wiper and the glazed surface, the glass being swept and the streamlining element are protected.

2. A streamlined screen wiper according to Claim 1, characterised in that the shock absorbing means (21) are carried by the screen wiper arm (5).

3. A streamlined screen wiper according to Claim 1, characterised in that the shock absorbing means (21) are carried by the streamlining element (14).

4. A streamlined screen wiper according to one of Claims 1 to 3, characterised in that the shock absorbing means comprise a projecting element (22) which is directed towards the surface being swept (2), from which it is spaced away.

5. A streamlined screen wiper according to Claim 4, characterised in that the free end of the projecting element (22) comprises a resiliently deformable portion (24) directed towards the surface (2) being swept.

6. A streamlined screen wiper according to Claim 4 or Claim 5, characterised in that the projecting element (22) is carried by a base (29).

7. A streamlined screen wiper according to Claim 6, characterised in that the base (29) cooperates with a pedestal (30) projecting from the streamlining element (14).

8. A streamlined screen wiper according to Claim 6 or Claim 7, characterised in that the base (29) is connected to the pedestal (30).

9. A streamlined screen wiper according to one of Claims 6 to 8, characterised in that the base (29) and the pedestal (30) are disposed on either side of the screen wiper arm (5), whereby to immobilise the streamlining element (14) with respect to the arm (5).
